# EUROPEAN PATENT SPECIFICATION

(11) **EP 1 619 121 B1**
(45) Date of publication and mention of the grant of the patent: **12.12.2007**
(21) Application number: 05254574.6
(22) Date of filing: 22.07.2005
(51) Int. Cl.: B64D 13/04

(54) **Cabin pressure control system and method**
Kabinendruckregelsystem und Verfahren zur Kabinendruckregelung
Système et procédé de commande de la mise en pression des cabines

(30) Priority: 22.07.2004 US 590737 P; 31.01.2005 US 48010
(43) Date of publication of application: 25.01.2006
(73) Proprietor: Honeywell International Inc., Morristown, New Jersey 07960 (US)
(72) Inventor: Whitney, Thomas J., Tucson AZ 85718 (US); Arthurs, Timothy R., Tucson AZ 85742 (US); Horner, Darrell W., Oro Valley AZ 85737 (US)
(74) Representative: Haley, Stephen

(56) References cited:
- WO-A-03/072432
- US-A1- 2002 173 263

## Description

### TECHNICAL FIELD

The present invention relates to an aircraft cabin pressure control system and method and, more particularly, to an improved cabin pressure control system valve that includes redundant and dissimilar pressure and differential pressure monitoring methods.

### BACKGROUND

For a given airspeed, an aircraft may consume less fuel at a higher altitude than it does at a lower altitude. In other words, an aircraft may be more efficient in flight at higher altitudes as compared to lower altitudes. Moreover, bad weather and turbulence can sometimes be avoided by flying above such weather or turbulence. Thus, because of these and other potential advantages, many aircraft are designed to fly at relatively high altitudes.

As the altitude of an aircraft increases, the ambient pressure outside of the aircraft decreases and, unless otherwise controlled, excessive amounts of air could leak out of the aircraft cabin causing it to decompress to an undesirably low pressure. If the pressure in the aircraft cabin is too low, the aircraft passengers may suffer hypoxia, which is a deficiency of oxygen concentration in human tissue. The response to hypoxia may vary from person to person, but its effects generally include drowsiness, mental fatigue, headache, nausea, euphoria, and diminished mental capacity.

Studies have shown that the symptoms of hypoxia may become noticeable when cabin pressure altitude is above the equivalent of 8,000 feet. Thus, many aircraft are equipped with a cabin pressure control system to, among other things, maintain the cabin pressure altitude to within a relatively comfortable range (e.g., at or below approximately 8,000 feet) and allow gradual changes in the cabin pressure altitude to minimize passenger discomfort.

Although, as just noted, cabin pressure altitude is typically maintained at or below 8,000 feet, the aircraft may be flying at an altitude much greater than this (e.g., up to 45,000 feet). Thus, the aircraft fuselage structure is designed to withstand the pressure differential between the pressure of the cabin air and the pressure of the ambient air. This is typically referred to as the cabin-to-ambient differential pressure. When the cabin pressure altitude is lower than the airplane pressure altitude (i.e., cabin pressure is greater than atmospheric pressure), a *positive* cabin-to-atmosphere differential pressure exists.

As is also generally known, aircraft descend and land at airports of varying altitudes. Thus, the cabin pressure altitude may be controlled so that the aircraft lands with little to no positive cabin-to-ambient differential pressure. However, it is possible that, in some situations, the cabin pressure altitude could exceed the airplane pressure altitude (e.g., cabin pressure less than atmospheric pressure), resulting in a *negative* cabin-to-ambient differential pressure. Thus, in addition to being designed to withstand a maximum positive cabin-to-ambient differential pressure, the aircraft fuselage is also designed to withstand a maximum negative cabin-to-ambient differential pressure.

It will be appreciated that an aircraft, if it is to fly efficiently and economically, will typically not be designed with a fuselage that can withstand an infinitely large positive cabin-to-ambient differential pressure, or an infinitely large negative cabin-to-ambient differential pressure. Therefore, most aircraft fuselages are designed for certain maximum structural limits, and then other systems are included in the aircraft to maintain the positive and negative cabin-to-ambient differential pressures within the structural limit. For example, many modem high altitude aircraft fuselages are designed such that the positive differential pressure limit is on the order of about 8 to 10 psid, and the negative differential pressure limit is on the order of about-0.2 to -0.5 psid.

In addition to a control system for maintaining cabin pressure altitude, regulations promulgated by various governmental certification authorities require that aircraft be equipped with specified indications and/or warnings to alert pilots to a decompression event. In particular, these regulations require that pilots be provided with an indication of actual cabin pressure altitude, and the differential pressure between cabin pressure altitude and actual pressure altitude outside of the aircraft. These regulations also require that the pilots be provided with a visual or audible warning, in addition to the indications, of when the differential pressure and cabin pressure altitude reach predetermined limits. Moreover, in order for an aircraft to be certified for flights above 30,000 feet, it must include oxygen dispensing units that automatically deploy before the cabin pressure altitude exceeds 15,000 feet.

In order to meet the above-noted requirements for alarm, indication, and oxygen deployment, various types of systems and equipment have been developed. For example, some systems have included analog-pneumatic gages and aneroid switches, audible alarms, warning lights, and/or color coded messages. One particular system, known as a cabin pressure acquisition module (CPAM), is a stand-alone component that uses a single pressure sensor to provide the alarm, indication, and oxygen deployment capabilities. In addition, some cabin pressure control systems are designed to not only perform cabin pressure control operations, but to use the pressure sensor within the cabin pressure control system to provide the same alarms, indications, and oxygen deployment functions as the CPAM.

Aircraft and the cabin pressure control systems installed on aircraft are robustly designed and manufactured, and are operationally safe. Nonetheless, in addition to providing the alarm, indication, and oxygen deployment functions noted above, certification authorities also require-that aircraft be analyzed for certain events that may occur under certain, highly unlikely conditions. For example, one particular type of hypothetical event that aircraft may be analyzed for is known as a "gradual decompression without indication." In analyzing such an event, a component failure is postulated that causes the cabin of the aircraft to gradually decompress. In addition, the system that provides the alarm, indication, and oxygen deployment functions is also postulated to fail, resulting in a hypothetical loss of indication and/or warning of the decompression, and no oxygen deployment.

Previously, the gradual decompression without indication event was classified by certification authorities as a "major" event. This meant that the probability of the event was less than one occurrence per 1,000,000 flight hours (e.g., 10⁻⁶ event/flight-hour). Certification authorities have recently changed the classification of this event to a "catastrophic" event. A catastrophic event is one in which the probability less than one occurrence per billion flight-hours (e.g., 10⁻⁹ event/flight-hour).

One particular design option that may be implemented to meet the above regulations is to use a CPAM in combination with a cabin pressure control system. To reduce the likelihood of common mode failure, the two systems may use different transmission methods to output the information for alarm, indication, and oxygen deployment (e.g., one system may use ARINC 429 protocol, the other may use RS422 protocol). This implementation, while it may reduce the likelihood for the gradual decompression without indication event to less than 10⁻⁹ event/flight-hour, also presents certain drawbacks. In particular, this implementation may result in substantially increased costs and aircraft down time associated with installation, integration, and maintenance. It may also result in increased aircraft weight and reduced space.

Hence, there is a need for an aircraft cabin pressure control system that provides cabin pressure control to limit the cabin pressure altitude, limits the positive or negative cabin-to-ambient differential pressure, and provides the alarm, indication, and oxygen deployment functions, that is designed in a manner to meet stringent safety guidelines for a gradual decompression without indication event, and/or that does not substantially increase installation, integration, and maintenance costs. The present invention addresses one or more of these needs. Other examples of prior art devices can be found in WO-A-03/072432.

In order to solve the problems associated with the prior art, the present invention provides An aircraft cabin pressure control system which comprises:
a first cabin pressure sensor operable to sense aircraft cabin pressure and supply a first cabin pressure signal representative thereof;
a second cabin pressure sensor dissimilar from the first cabin pressure sensor, the second cabin pressure sensor operable to sense aircraft cabin pressure and supply a second cabin pressure signal representative thereof;
a third cabin pressure sensor dissimilar from the first cabin pressure sensor, the third cabin pressure sensor operable to sense aircraft cabin pressure and supply a third cabin pressure signal representative thereof;
a first analog circuit coupled to receive the first cabin pressure signal and operable, in response thereto, to supply a first analog cabin altitude limit discrete logic signal if the first cabin pressure is less than a minimum pressure value;
a second analog circuit coupled to receive the second cabin pressure signal and operable, in response thereto, to supply a second analog cabin altitude limit discrete logic signal if the second cabin pressure is less than the minimum pressure value; and
a primary controller coupled to receive the first and second analog cabin altitude limit discrete logic signals and the third cabin pressure signal, the primary controller operable in response thereto, to:
   generate, based on the third cabin pressure signal, a digital cabin altitude limit discrete signal;
   determine when at least two of the digital cabin altitude limit discrete signal and the analog cabin altitude discrete logic signals are indicative of cabin pressure being less than the minimum pressure value; and, if so
   supply primary valve command signals that will cause an outflow valve to close.

Preferably, the primary controller comprises:
a primary control circuit coupled to receive the first and second analog cabin altitude limit discrete logic signals and the third cabin pressure signal, and operable, in response thereto, to (i) determine when at least two of the sensed cabin pressures is less than the minimum pressure value and (ii) if so, to supply primary valve actuation control signals that will cause an outflow valve to close; and
a primary valve actuation control circuit coupled to receive the primary valve actuation control signals and operable, in response thereto, to supply the primary valve command signals that will cause the outflow valve to close.

Preferably, the primary control circuit comprises:
a digital signal conditioning circuit coupled to receive the third cabin pressure signal and operable, in response thereto, to supply a digital cabin pressure signal representative thereof.

Preferably, the primary control circuit is further operable, upon receipt of the third cabin pressure signal, to supply a digital cabin altitude limit discrete logic signal if the third cabin pressure is less than the minimum pressure value,

Preferably the system further comprises:
a secondary controller coupled to receive the first analog cabin altitude limit discrete logic signal, the second analog pressure signal and the digital cabin altitude limit discrete logic signal, the secondary control circuit operable, upon receipt thereof, to (i) determine when at least two of the sensed cabin pressures is less than the minimum pressure value and (ii) if so, to supply secondary valve command signals that will cause the outflow valve to close.

Preferably, the secondary controller comprises:
a secondary control circuit coupled to receive the first analog cabin altitude limit discrete logic signal, the second analog pressure signal, and the digital cabin altitude limit discrete logic signal, and operable, upon receipt thereof, to (i) determine when at least two of the sensed cabin pressures is less than the minimum pressure value and (ii) if so, to supply secondary valve actuation control signals that will cause the outflow valve to close; and
a secondary valve actuation control circuit coupled to receive the secondary valve actuation control signals and operable, in response thereto, to supply the primary valve command signals that will cause the outflow valve to close.

Preferably, the primary valve actuation control circuit is further coupled to receive the first and second analog cabin altitude limit discrete logic signals and the digital cabin altitude limit signal and is further operable, in response thereto, to determine when at least two of the sensed cabin pressures is less than the minimum pressure value.

Preferably, the first and second analog circuits each comprises:
an analog signal conditioning circuit coupled to receive either the first or second pressure signal and operable in response thereto, to supply a first or second analog pressure signal, respectively; and
a comparator circuit coupled to receive the first or second analog pressure signal and operable, in response thereto to supply the first or second analog discrete logic signal, respectively, if the first cabin pressure, respectively, is less than the minimum pressure value.

Preferably, the primary controller is further coupled to receive an atmospheric pressure signal representative of the atmospheric pressure and operable, upon receipt thereof, to (i) determine the pressure differential between the aircraft cabin pressure and (ii) inhibit use of the third cabin pressure from the determination of when at least two of the sensed cabin pressures is less than the minimum pressure value, and wherein the system further comprises:
a differential pressure sensor adapted to sense a pressure differential between the aircraft cabin pressure and atmospheric pressure and supply a differential pressure signal representative thereof;
a secondary controller coupled to receive the differential pressure signal and operable, upon receipt thereof, to supply an altitude limit inhibit command signal if the differential pressure exceeds a predetermined magnitude;
a controllable switch coupled to receive the altitude inhibit command and operable, upon receipt thereof, to prevent the second analog cabin altitude limit discrete logic signal from being supplied to the primary controller.

Preferably, the system further comprises:
an outflow valve adapted coupled to receive the primary valve command signals and operable, upon receipt thereof, to move between at least an open position and a closed position.

Other independent features and advantages of the preferred cabin pressure control system and method will become apparent from the following detailed description, taken in conjunction with the accompanying drawings which illustrate, by way of example, the principles of the invention.

In the drawings:
FIG. 1 is a functional block diagram of an exemplary embodiment of an aircraft cabin pressure control system according to an embodiment of the present invention;
FIG. 2 is a perspective view of an exemplary physical embodiment of an outflow valve that may be used in the system of FIG. 1;
FIG. 3 is a cross section view of a portion of the exemplary outflow valve shown in FIG. 1;
FIG. 4 is a close-up cross section view of an exemplary actuator assembly that may be used with the outflow valve shown in FIGS. 2 and 3;
FIG 5 is a functional block diagram of an exemplary control unit that may be used to implement the system shown in FIG. 1; and
FIG. 6 is a functional block diagram of an instrumentation and control circuit that may be used to implement the control unit shown in FIG. 5.

### DETAILED DESCRIPTION OF A PREFERRED EMBODIMENT

The following detailed description of the invention is merely exemplary in nature and is not intended to limit the invention or the application and uses of the invention. Furthermore, there is no intention to be bound by any theory presented in the preceding background of the invention or the following detailed description of the invention.

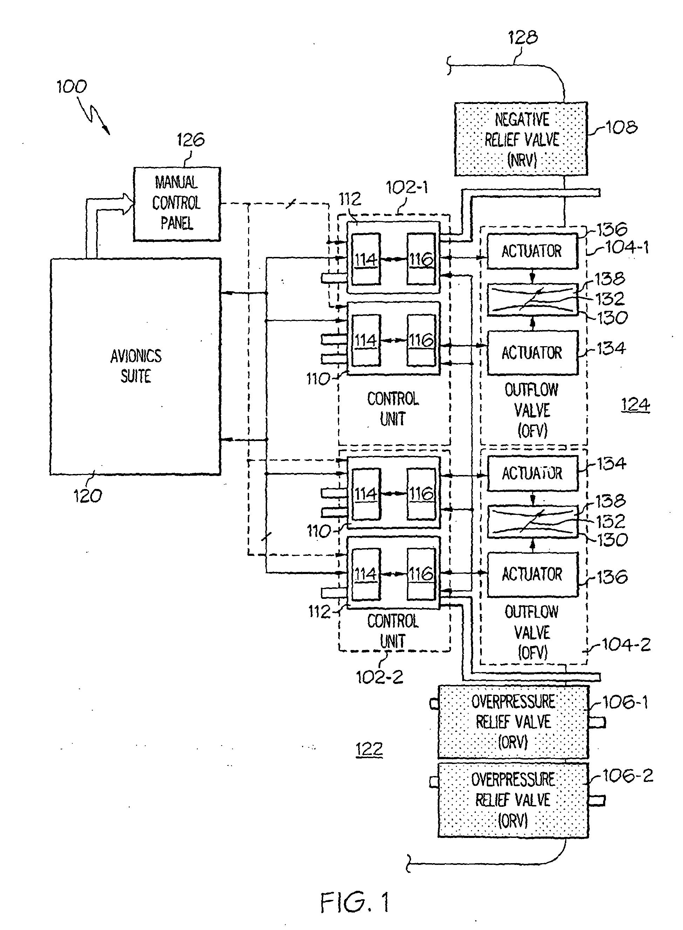

Turning now to the description, and with reference first to FIG. 1, a functional block diagram of an exemplary aircraft cabin pressure control system 100, and its interconnections to certain other aircraft systems, is shown. In the depicted embodiment, the system 100 includes two independent control units 102 (102-1, 102-2), two independent outflow valves 104 (104-1, 104-2), two independent overpressure relief valves 106 (106-1, 106-2), and a single negative pressure relief valve 108. Before proceeding further with the description of the system 100, it is noted that the depicted embodiment is merely exemplary and that the system 100 could be implemented with a single control unit 102, a single outflow valve 104, and a single overpressure relief valve 106, while still meeting all certification authority requirements.

The control units 102 are implemented as redundant, dual-channel controllers, and each includes a primary controller 110 and a secondary controller 112. The primary 110 and secondary 112 controllers, which are preferably powered from separate independent power sources and are preferably physically separated from one another, each include an instrumentation and control circuit 114 and a valve control circuit 116. As will be described in more detail further below, the instrumentation and control circuits 114 each include redundant, dissimilar pressure sensors (not shown in FIG. 1). As will also be described in more detail further below, the instrumentation and control circuits 114 in the primary controllers 110 include dissimilar absolute pressure sensors that are each configured to sense cabin pressure, and the instrumentation and control circuits 114 in the secondary controllers 112 include an absolute pressure sensor that is configured to sense cabin pressure, and a dissimilar differential pressure sensor that is configured to sense cabin-to-atmosphere differential pressure. Thus, as is shown in FIG. 1, the primary controllers 110 are ported to the aircraft cabin 122, and the secondary controllers are ported to both the aircraft cabin 122 and to atmosphere 124.

The instrumentation and control circuits 114 in each controller 110, 112 also communicate with the aircraft avionics suite 120 via, for example, ARINC-429, analog, and/or discrete input/output signals. Based on the signals received from the avionics suite 120, as well as signals supplied from the above-mentioned sensors, the instrumentation and control circuits 114 in each controller 110, 112, preferably using use different application software, compute cabin pressure logic, supply various alarm, indication, warning, and/or control signals, and supply appropriate actuation control signals to the respective valve control circuits 116.

The valve control circuits 116 in each controller 110,112 receive the actuation control signals supplied from the respective instrumentation and control circuits 114. In response to the actuation control signals, which preferably include both speed information and direction information, the valve control circuits 116 supply valve command signals to the respective outflow valve 104, to thereby control the position of the respective outflow valve 104, and thereby modulate cabin pressure. The valve control circuits 116 may also be controlled manually via a manual control panel 126. The manual control panel 126, when used, disables the automatic cabin pressure control function implemented in the instrumentation and control circuits 114, and preferably supplies actuation control signals to the valve control circuits 116 in both the primary 110 and secondary 112 controllers. Alternatively, it will be appreciated that it could supply the actuation control signals to only one of the controllers 110 or 112. In either case, the actuation control signals supplied from the manual control panel 126 preferably cause the valve control circuits 116 to move the respective outflow valve 104 in the commanded direction at a constant speed.

The outflow valves 104 are preferably mounted on an aircraft bulkhead 128, and each includes a valve body 130, a valve element 132, a primary actuator 134, and a secondary actuator 136. The valve body 130 has a flow passage 138 that extends through it, such that when the outflow valve 104 is mounted on the aircraft bulkhead 128, the flow passage 138 is in fluid communication with the aircraft cabin 122 and the external atmosphere 124. The valve element 132 is movably mounted on the valve body 130 and extends into the flow passage 138. The valve element 132 is movable between an open position, in which the aircraft cabin 122 and the external atmosphere 124 are in fluid communication, and a closed position, in which the aircraft cabin 122 is sealed from the external atmosphere.

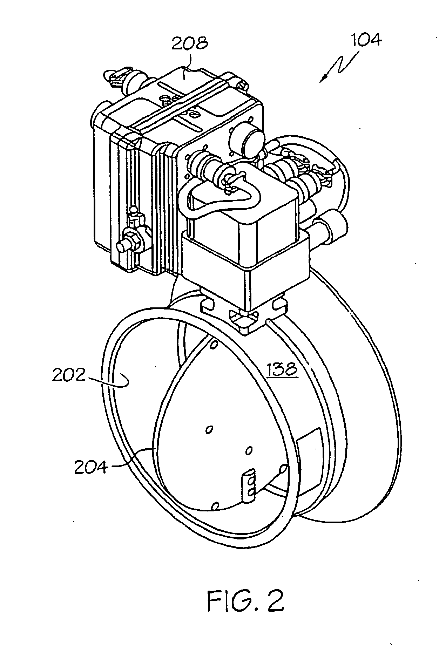

The primary 134 and secondary actuators 136 are both coupled to the valve element 132 and position the valve element 132 to a commanded position, to thereby control cabin pressure. To do so, the primary 134 and secondary 136 actuators are coupled to receive valve command signals supplied by the valve control circuits 116 in the primary 110 and secondary 112 controllers, respectively. In response to the supplied valve command signals, the appropriate actuator, either the primary 134 or secondary 136 actuator (or both), moves the valve element 132 to the commanded position. It will be appreciated that the outflow valve 104 may be implemented in any one of numerous configurations. With reference to FIGS. 2-4, a particular physical implementation will now be described.

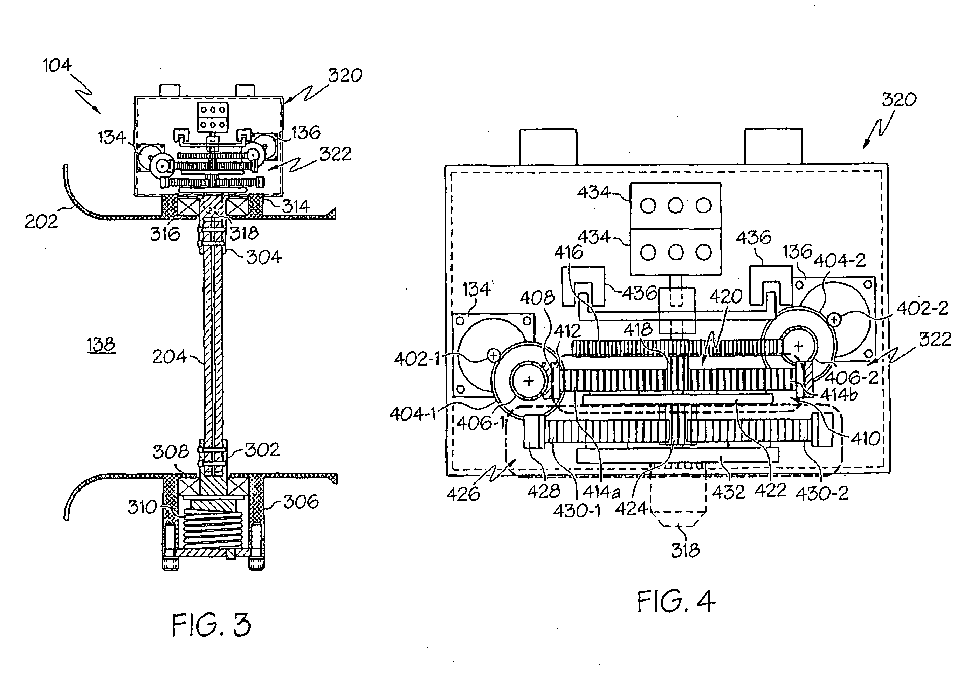

Referring first to FIG. 2, it is seen that the valve body 130 is preferably a cylindrically shaped duct that is configured to mount on the aircraft bulkhead 128, and includes a cylindrical inner surface 202 that forms the flow passage 138. The valve element 132 includes a butterfly plate 204 that is mounted within the flow passage 138. As is shown more clearly in FIG. 3, the butterfly plate 204 is coupled to two shafts, a support shaft 302 and a drive shaft 304. The support shaft 302 is rotationally mounted within a housing 306 via a first bearing assembly 308 and is coupled to a torsion spring 310, which is also mounted within the housing 306. The torsion spring 310 is configured to supply a bias force to the support shaft 302 that biases the butterfly plate 204 toward the closed position. The drive shaft 304 is rotationally mounted within a housing 314 via a second bearing assembly 316 and is coupled to an actuator output shaft 318, which receives a drive force from, an actuator assembly 320.

The actuator assembly 320 includes both the primary actuator 134 and the secondary actuator 136. In the depicted embodiment, the primary 134 and secondary 136 actuators are each permanent magnet, three-phase, four-pole brushless DC motors. It will be appreciated that this is merely exemplary, and that the actuators 134, 136 could be configured as brushed DC motors, or as any one of numerous types of AC motors. Moreover, it will be appreciated that the primary 134 and secondary 136 motors could be coupled to the drive shaft 304 in any one of numerous ways. In the depicted embodiment, however, the primary 134 and secondary 136 motors are coupled to the drive shaft 304 via a planetary differential gear set 322. With reference now to FIG. 4, the planetary differential gear set 322 will, for completeness, now be briefly described.

As is shown in FIG. 4, the primary 134 and secondary 136 motors each include a pinion output shaft 402 (402-1, 402-2). The pinion output shafts 402 each engage, and thus drive, a spur gear 404 (404-1, 404-2), which in turn is coupled to a worm gear 406 (406-1, 406-2). The worm gear 406-1 that is driven by the primary motor 134 engages a combination gear 410 (encircled in phantom) that includes an outer worm wheel 408 and an inner ring gear 412. The worm wheel 408 engages, and is thus driven by, the worm gear 406-1, and the inner ring gear 412 engages, and thus drives, three planet gears 414a-c (only two shown) that are configured as a speed-summing planetary gear set 420.

The worm gear 406-2 that is driven by the secondary motor 136 also drives a worm wheel 416. This worm wheel 416 is coupled to a pinion gear 418 that functions as the sun gear for the speed summing planetary gear set 420. The speed summing planetary gear set 420 can be driven by the primary motor 134, the secondary motor 136, or both the primary 134 and secondary 136 motors simultaneously. In the latter instance, the speed summing planetary gear set 420 sums the speeds of both motors 134, 136 into a resulting rotational output speed.

In addition to the planet gears 414a-c, the speed summing planetary gear set 420 includes a carrier gear 422, which is coupled to yet another pinion gear 424. This latter pinion gear 424 functions as the sun gear for, and thus drives, a speed reducing output planetary gear set 426 (also encircled in phantom). The outer ring gear 428 of the output planetary gear set 426 is mounted against rotation. Thus, as the planetary gears 430-1, 430-2 of the output gear set 426 are rotated by the pinion gear 424, the output planetary gear set carrier gear 432 rotates. The output planetary gear set carrier gear 432 is coupled to actuator output shaft 318, which is in turn coupled to the butterfly drive shaft 304. Thus, the drive force supplied by either, or both, the primary 134 or secondary 136 motors is transmitted to the butterfly plate 204, to thereby move the butterfly plate 204 to the commanded position.

As FIG. 4 also shows, each outflow valve 104 includes a valve position sensor 434 and a set of end of travel sensors 436. The valve position sensor 434 may be any one of numerous types of position sensors, but in the depicted embodiment is a dual-channel potentiometer. Each potentiometer channel receives an excitation voltage from either the primary 110 or secondary controller 112 in its respective control unit 102, and supplies a valve position feedback signal to the same controller that supplies the excitation signal.

The end-of-travel sensors 436 are used to sense when the outflow valve 104 reaches its fully closed position and its fully open position. The number and type of sensors used for the end-of-travel sensors 436 may vary, but in the depicted embodiment each outflow valve 104 includes four Hall sensors (only two shown), with two sensors 436 associated with each controller 110, 112 in the associated control unit 102. Thus, one sensor in each controller 110, 112 is used to sense the fully closed position, and one sensor in each controller 110, 112 is used to sense the fully open position. As with the valve position sensor 434, each end-of-travel sensor 436 receives an excitation voltage from either the primary 110 or secondary controller 112 in its respective control unit 102, and supplies an appropriate end-of-travel discrete signal to the same controller that supplies the excitation signal.

Returning once again to FIG. 1, it was noted that the depicted cabin pressure control system 100 includes two independent overpressure relief valves 106, and a negative pressure relief valve 108. The overpressure relief valves 106 and the negative pressure relief valve 108, similar to the outflow valves 104, are each mounted on the aircraft bulkhead 128. As is generally known, the overpressure relief valves 106 are each configured to be normally closed, and to move to an open position when the cabin-to-atmosphere differential pressure exceeds a predetermined value, to thereby limit the cabin-to-atmosphere differential pressure. The negative pressure relief valve 108, as is also generally known, is configured to be normally closed, and to move to an open position when atmospheric pressure exceeds cabin pressure by a predetermined amount, to thereby equalize the pressure across the aircraft bulkhead 128.

It will be appreciated that a description of the specific structure of the overpressure relief valves 106 and the negative pressure relief valve 108 is not needed to enable or fully disclose the present invention. As such, a detailed description of these components will not be further provided. Moreover, as was previously stated, the system 100 may be implemented to certification authority requirements with only a single overpressure relief valve 106, and with no negative pressure relief valve 108. This is due, in part, to the fact that the control units 102, as will be described more fully further below, are preferably configured to implement both positive and negative pressure relief functions. In addition, one or both of the overpressure relief valves may be configured to implement a negative pressure relief function.

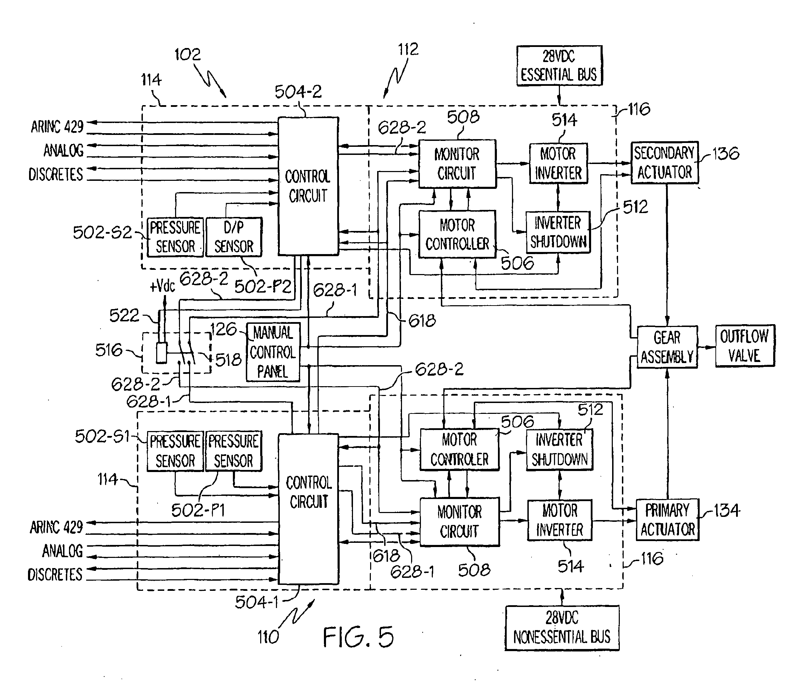

Turning now to FIG. 5, a more detailed description of an embodiment of one of the control units 102 and, more particularly, a more detailed description of the control unit primary 110 and secondary 112 controllers will be provided. The primary 110 and secondary 112 controllers in each control unit 102, as was previously mentioned, each include an instrumentation and control circuit 114 and a valve actuator control circuit 116. The instrumentation and control circuits 114 in each controller 110, 112 include two pressure sensors - a primary pressure sensor 502-P (502-P1, 502-P2) and a secondary pressure sensor 502-S (502-S1, 502-S2) - and a control circuit 504 (504-1, 504-1). In the primary controller 110 the primary and secondary pressure sensors 502-P1, 502-S1 are both absolute pressure sensors that are configured to sense aircraft cabin pressure and supply cabin pressure signals representative thereof. As was alluded to above, the primary controller pressure sensors 502-P1, 502-S are dissimilar pressure sensors. That is, the primary channel pressure sensors 502-P 1, 502-S1 are either physically or functionally dissimilar, or both. In the depicted embodiment, the primary controller pressure sensors 502-P1, 502-S1 are both physically and functionally dissimilar, in that the primary sensor 502-P1 is a quartz-type capacitive pressure sensor, and the secondary sensor 502-S1 is a piezoresistive-type strain gage pressure sensor.

In the secondary controller 112, the primary and secondary pressure sensors 502-P2, 502-S2 are also preferably physically and functionally dissimilar, in that the primary sensor 502-P2 is a quartz-type capacitive sensor and the secondary sensor 502-S2 is a piezoresistive-type strain gage sensor. In addition to this dissimilarity, the primary sensor 502-P2 is implemented as a differential pressure (D/P) sensor that is configured to sense cabin-to-atmosphere differential pressure and supply a differential pressure signal representative thereof, and the secondary sensor 502-S2 is implemented as an absolute pressure sensor that is configured to sense cabin pressure and supply a cabin pressure signal representative thereof

It will be appreciated that the although the primary and secondary pressure sensors 502-P, 502-S in the primary and secondary controllers 110, 112 are both physically and functionally dissimilar, the primary and secondary pressure sensors 502-P, 502-S in the same controller 110, 112 could be physically dissimilar from each other while being functionally similar. For example, the primary and secondary sensors 502-P, 502-S in the same controller 110, 112 could be the same general type of sensors (e.g., both quartz sensors) that are constructed physically dissimilar. It will additionally be appreciated that the above-noted sensor types are merely exemplary and that the primary and secondary sensors 502-P, 502-S in the same controller 110, 112 could be implemented using other types of sensors including, but not limited to, strain gage sensors, optical type sensors, and thermal type sensors, so long as the sensors are physically and/or functionally dissimilar.

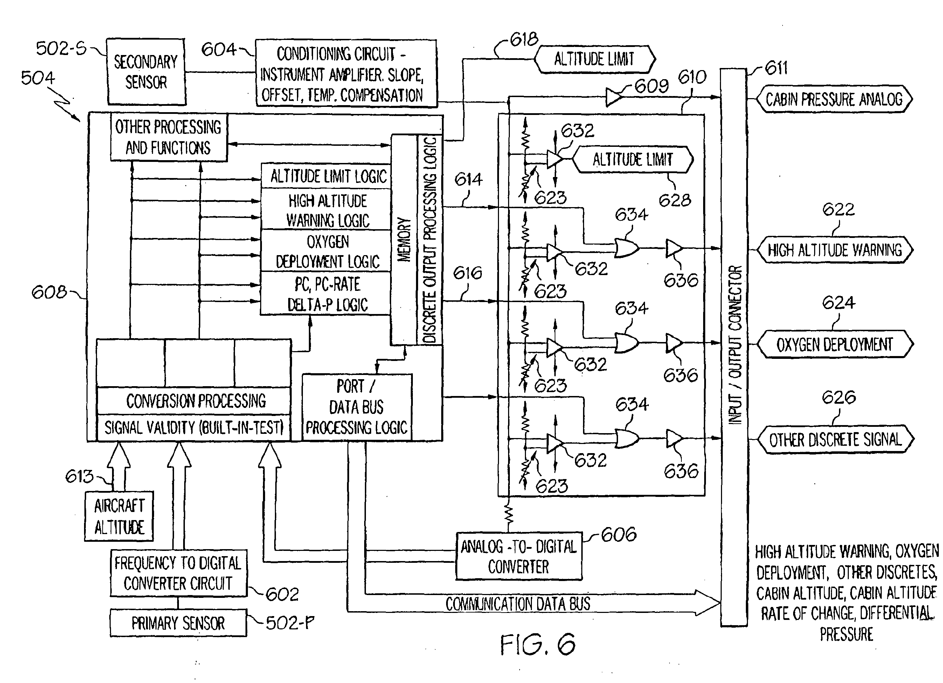

The pressure signals from the pressure sensors 502-P, 502-S in both the primary 110 and secondary 112 controller instrumentation and control circuits 114 are supplied to, and properly processed by, the control circuits 504 in each controller. The primary controller control circuit 504-1 and the secondary controller control circuit 504-2 are preferably physically identical, though each may implement different functions, which will be described in more detail further below. With reference now to FIG. 6, a more detailed description of a particular embodiment of each control circuit 504 will be provided.

Each control circuit 504 includes two signal conditioning circuits - a digital signal conditioning circuit 602 and an analog signal conditioning circuit 604 - an analog-to-digital converter (A/D) circuit 606, a processor 608, and a discrete signal processing circuit 610. The digital 602 and analog 604 signal conditioning circuits receive the pressure signals supplied by the primary 504-P1, 504-P2 and secondary 504-S1, 504-S2 pressure sensors, respectively, and properly condition the pressure signals for further processing. Thus, in the depicted embodiment, the pressure signals supplied to the digital 602 and analog 604 signal conditioning circuits in the primary controller 110 are both absolute pressure signals, and the pressure signals supplied to the digital 602 and analog 604 signal conditioning circuits in the secondary controller 112 are differential pressure and absolute pressure signals, respectively.

In the depicted embodiment, the digital signal conditioning circuit 602 is a frequency-to-digital (F-to-D) converter that is implemented as a programmable logic device (PLD); however, it will be appreciated that it could be implemented as any one of numerous other types of digital signal conditioning circuits. The analog signal conditioning circuit 604, at least in the depicted embodiment, includes an analog amplifier circuit with slope, offset, and temperature compensation circuitry, which supplies a direct current (DC) signal that is proportional to the sensed cabin pressure. It will be appreciated that the depicted digital 602 and analog 604 signal conditioning circuits are only exemplary of a particular physical embodiment and that other types of digital and analog signal conditioning circuits could also be used to provide appropriate signal conditioning for the primary 504-P and secondary 504-S sensors.

Turning now to the remainder of the circuit, it is seen that the conditioned analog pressure signal supplied by the analog signal conditioning circuit 604 is supplied to the A/D circuit 606, and may also be supplied, via a buffer amplifier 609 and an input/output (1/O) connector 611, directly to the avionics suite 120 not shown in FIG. 6. It is noted that the conditioned analog pressure signal is also supplied to the discrete signal processing circuit 610, which is discussed further below. The A/D circuit 606 receives the conditioned analog pressure signal from the analog signal conditioning circuit 604 and, in a conventional manner, converts the analog cabin pressure signal to an equivalent digital signal. The A/D circuit 606 may be any one of numerous A/D circuits known in the art for providing this functionality. It is additionally noted that the A/D circuit 606 may be a separate circuit element or it may be an integrated part of the processor 608, the function of which will now be described.

The processor 608 receives the digital pressure and/or differential pressure signals supplied by the digital signal conditioning circuit 602 and the A/D circuit 606. The processor 608 in the primary controller 110 also receives a digital signal representative of aircraft altitude 613 from an external source such as, for example, the aircraft avionics suite 120. The processor 608 in the secondary controller 112 may also receive the digital signal representative aircraft altitude 613, if so desired. In any case, the processor 608, using software that is stored either externally or in on-board memory, then processes the digital pressure and/or differential pressure signals to supply the alarm, indication, and control signals necessary to meet aircraft certification requirements, as well as additional indication signals not specifically needed to meet certification requirements. As will now be described, the specific alarm, indication, and control signals supplied by the processor 608 may vary depending on whether the processor 608 is in the primary controller 110 or the secondary controller 112.

In the primary controller 110, the processor 608, using the pressure signal supplied from its primary 502-P1 and secondary 502-S 1 pressure sensors and the aircraft altitude signal 613, determines primary and secondary cabin pressures (P_{c} Primary, P_{c} Secondary), cabin pressure rate of change, and -atmospheric pressure (Pₐ). Based on these pressures, the processor 608 also determines cabin altitude, cabin altitude rate of change, and cabin-to-atmosphcre differential pressure. In addition to these signals, the processor 608 also generates various discrete logic signals. The discrete logic signals include, but are not limited to, a high cabin altitude warning signal 614, an oxygen deployment signal 616, and a cabin altitude limit signal 618.

In the secondary controller 112, the processor 608, using the differential pressure signals supplied from its primary pressure sensor 502-P2, determines at least cabin-to-atmosphere differential pressure (ΔP_{c/a}). If desired, the processor 608 may also use the pressure signal supplied from its secondary pressure sensor 502-S2 determine cabin pressure (P_{c} Secondary), and supplies. In addition, as was previously noted, in some embodiments the secondary controller processor may also receive the aircraft altitude signal 613. If so, the processor 608 may also determine atmospheric pressure (Pₐ). Thus, in some embodiments, the processor 608 secondary controller 112, similar to the processor 608 in the primary controller 110, may also determine cabin altitude, cabin altitude rate of change, and may additionally generate, if so desired, various discrete logic signals including, for example, the high cabin altitude warning signal 614 and the oxygen deployment control signal 616.

In the depicted embodiment, it is seen that the high cabin altitude warning signal 614 and the oxygen deploy signal 616 generated by the processor 608 are supplied to the discrete signal processing circuit 610. However, as will be discussed in more detail further below, the cabin altitude limit signal 618, which is generated by the processor 608 in the primary controller 110 only, is supplied to other circuitry that is used to implement a cabin altitude limit function. The cabin altitude limit function, and the circuitry that is used to implement this function, are described in more detail further below. Before doing so, however, the discrete signal processing circuit will now be described.

The discrete signal processing circuit 610 receives the conditioned analog pressure signal from the analog signal conditioning circuit 604 and at least some of the discrete logic signals from the processor 608, and supplies various discrete output signals 622, 624, 626 to the aircraft avionics suite 120, via the I/O connector 611. The discrete signal processing circuit 610 is also used to provide an analog altitude limit discrete signal 628-1, 628-2, which is based on the pressure sensed by the secondary pressure sensor 502-S1 or 502-S2, respectively. This discrete signal 628 is not supplied to the avionics suite 120, but supplied to the above mentioned circuitry that is used to implement the cabin altitude limit function. In the depicted embodiment, the discrete signal processing circuit 610 includes a plurality of comparator circuits 632, a plurality of logic OR circuits 634, and a plurality of inverter buffer amplifier circuits 636. One of each of these circuits is used to generate each of the discrete logic signals 622, 624, 626 that is supplied to the avionics suit 120, whereas only a comparator circuit 632 is used to generate the analog altitude limit discrete signal 628.

As depicted, each comparator circuit 632 has at least two input terminals, one input terminal is coupled to receive the conditioned analog pressure signal and the other input terminal is coupled to a variable voltage divider 623 that is set to a predetermined voltage set point. Each comparator circuit 632 operates identically. That is, when the conditioned analog pressure signal magnitude is less than the particular voltage set point, the comparator circuit 632 will output a logic high signal, otherwise it outputs a logic low signal. The output of each comparator circuit 632 is coupled to one of the logic OR circuits 634.

Similar to the comparator circuits 632, each logic OR circuit 634 includes at least two input terminals. As was noted above, one of the input terminals is coupled to the output of one of the comparator circuits 632. The other input terminal is coupled to receive one of the discrete signals supplied by the processor 608. As is generally known, a logic OR circuit outputs a logic high signal when one or more of its inputs is high, and outputs a logic low signal only when all of its inputs are low. Thus, in the depicted embodiment, each logic OR circuit 634 will output a logic high signal when either its corresponding comparator circuit 632 outputs a high signal or the discrete signal supplied to it by the processor 608 is a high signal. The output of each logic OR circuit 634 is coupled to the input of one of the inverter buffer amplifiers 636, which inverts the logic OR circuit output and supplies this inverted discrete logic signal, via the I/O connector 611, to the avionics suite 120. It is noted that the processor's 608 discrete outputs and the analog discrete outputs (i.e., the comparator circuit 632 outputs) could be supplied to the avionics suite 120 separately, rather than logically ORing the signals together. However, by logically ORing the signals a single output for each discrete signal is used, which saves on the overall wiring in the aircraft. Moreover, it will be appreciated that the buffer amplifiers 636 could be either high-side drivers or low side drivers, depending on the logic being implemented.

Returning once again to FIG. 5, it is seen that the valve actuator control circuits 116 in each controller 110, 112 include a motor controller circuit 506, a monitor circuit 508, an inverter shutdown circuit 512, and an inverter circuit 514. The motor controller circuits 506 in each controller 110, 112 receive the actuation control signals supplied from its respective instrumentation and control circuit 114, and in response, supply appropriate inverter control signals. The inverter control signals are supplied to the associated inverter shutdown circuits 512, via the associated motor monitor circuits 508. In the depicted embodiment, in which the primary 134 and secondary 136 actuators are each brushless DC motors, the inverter control signals supplied from the motor controller circuits 506 are three-phase pulse width modulation (PWM) control signals. The motor controller circuits 506 also receive position feedback signals from the associated motor resolvers and valve position sensors 434, discussed above.

In response to the inverter control signals supplied from the motor control circuits 506, the inverter shutdown circuits 512 supply gate drive signals to the associated inverter circuits 514. The inverter circuits 514, in response to the gate drive signals, supply the valve command signals to the outflow valve primary 134 or secondary 136 actuators, as appropriate. In the depicted embodiment, the valve command signals are three-phase AC motor drive signals.

It is seen that in the depicted embodiment, the actuation control signals supplied to, and the control signals supplied from, the motor controller circuits 506 pass through the associated monitor circuits 508. The monitor circuits 508, which in the depicted embodiment are implemented as programmable logic devices (PLDs), each monitor the operation of its associated motor controller circuit 506. If a motor monitor circuit 508 determines that its associated motor controller circuit 506 is not functioning properly, it will disable the associated motor controller circuit 506 and supply a signal to the inverter shutdown circuit 512. In turn, the inverter shutdown circuit 512 causes the associated inverter circuit 514 to shut down. As a result, the output in the effected controller will be completely shutdown.

In addition to the monitoring function described above, the motor monitor circuits 508 also include an embedded motor control algorithm. The algorithm, which is a relatively crude control algorithm, may be implemented by the valve actuator control circuits 116 to control the position of the outflow valve 104. The circumstances under which the motor monitor circuits 508 implement the embedded control algorithm are discussed in more detail further below.

The above-described cabin pressure control system 100 is configured to not only implement normal aircraft cabin pressure control functions, but is additionally configured to implement various protection functions. For example, the system 100 is configured to implement a positive differential pressure limit function, a negative differential pressure limit function, and the previously mentioned cabin altitude limit function. The manner in which each of these protective functions is implemented will now be described in more detail, beginning with the cabin altitude limit function. In doing so, reference should be made to FIGS. 5 and 6 in conjuction.

As was noted above, the processor 608 in the primary controller control circuit 504-supplies a software generated altitude limit discrete signal 618, which is based on the pressure signal supplied from its primary pressure sensor S02-P1, and the discrete signal processing circuit 610 supplies an analog altitude limit discrete signal 628-1, which is based on the pressure signal from its secondary pressure sensor 502-S1. In addition, the discrete signal processing circuit 610 in the secondary controller 112 supplies an analog altitude limit discrete signal 628-2, which is based on the pressure signal supplied from its secondary pressure sensor 502-S2.

The primary controller altitude limit discrete signals 618, 628-1 are supplied to the primary controller valve actuator control circuit 116, the secondary controller instrumentation and control circuit 114, and the secondary controller valve actuator control circuit 116. Similarly, the secondary controller altitude limit discrete signal 628-1 is supplied to the secondary controller valve actuator control circuit 116, the primary controller instrumentation and control circuit 114, and the primary controller valve actuator control circuit 116. When two out of the three altitude limit discrete signals 618, 628-1, 628-2 indicate that an altitude limit condition exists, automatic control from the primary controller instrumentation and control circuit 114 is interrupted, and the primary and secondary valve actuator control circuits 116 simultaneously supply valve control signals to the outflow valve 104 that cause the outflow valve 104 to close.

Although the above-described cabin altitude limit function may be implemented in any one of numerous ways, in the depicted embodiment, the altitude limit discrete signals 618, 628-1, 628-2 are each supplied to both the F-toD circuits 602 and the motor monitor circuits 508 in the primary 110 and secondary 112 controllers. When the F-to-D circuit 602 and the motor monitor circuit 508 in the same controller 110 or 112 both determine that two out of the three altitude limit discrete signals 618, 628-1, 628-2 indicate that an altitude limit condition exists, the motor monitor circuit 508 interrupts any actuation control signals being supplied from the associated instrumentation and control circuit 114, and commands the motor control circuit 506 to supply inverter control signals that cause the outflow valve 104 to close. If the motor control circuit 506 does not respond in either the primary 110 or secondary 112 controller, and the altitude limit condition persists, the motor monitor circuit 508 will disable the motor control circuit 506 and implement the crude motor control algorithm that was previously mentioned to command the outflow valve 104 closed.

The control units 102 implement the positive and negative differential pressure limit functions using one of two methods. The first method is employed if the system 100 is implemented using two independent control units 102-1, 102-2, as shown in FIG. 1. With this implementation, if a fault occurs in the primary controller 110 of the active control unit 102-1 (102-2) that results in either a positive or a negative differential pressure limit being reached, the inactive control unit 102-2 (102-1) will become active to take control and limit the positive or negative pressure. When the previously inactive control unit 102-2 (102-1) is activated, the previously active control unit 102-1 (102-2) is inactivated.

The second method of differential pressure limiting is employed if, for some reason, the first method does not correct the condition, or if the system 100 is implemented with only a single control unit 102. In either case, as was previously noted, the secondary controller 112 in the control unit 102 includes the differential pressure sensor 502-P2 that senses cabin-to-atmosphere differential pressure directly, and supplies a differential pressure signal representative thereof to the control circuit 504-2. If the control circuit 504-2 in the secondary controller 112 determines that the differential pressure sensor (either positive or negative) exceeds a predetermined magnitude, it supplies a signal to the primary controller 110 to disable its control, and supplies actuation control signals to the secondary control controller valve control circuit 116 that will cause the outflow valve 104 to open and thereby reduce the differential pressure magnitude.

It will be appreciated that the aircraft in which the cabin pressure control system 100 is installed could attain a condition in which the cabin altitude is above the threshold of the altitude limit condition. As a result, the cabin altitude limit function-would command-the outflow valve 104 to close, where it would remain until the cabin-to-atmosphere differential pressure magnitude was reduced to below a predetermined value. However, if the aircraft-to-cabin differential pressure magnitude simultaneously exceeds the negative differential pressure limit, it may be more desirable to open the outflow valve 104. Thus, a potential conflict could exist between these two functions.

To prevent the above-described conflict, the control units 102 disable the cabin altitude limit function. To do so, the primary control circuit 504-1 disables the digital cabin altitude limit signal 618 using software. However, because the analog cabin altitude limit signals are not software controlled, the control units 102, as shown in FIG. 5, each include an altitude limit disable relay 516. The relay 516 includes two normally-closed contacts 518 that are disposed in series in the signal paths through which each of the analog altitude limit discrete signals 628-1, 628-2 is transmitted between the primary 110 and the secondary 112 controllers. The position of the altitude limit relay contacts 516 is controlled via an altitude limit disable discrete signal 522 that is supplied by the secondary controller control circuit 504-2. In particular, if the cabin-to-atmosphere differential pressure sensed by the differential pressure sensor 502-P2 is less than a predetermined value, the secondary controller control circuit 504-2 supplies the altitude limit disable discrete signal 626 to the relay 516. In response, the altitude limit relay contacts 518 open, and the analog cabin altitude limit discrete signals 628-1, 628-2 are not supplied to the other controller 110, 112. Thus, the cabin altitude limit function is disabled, and the control unit 102 can open the outflow valve 104.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An aircraft cabin pressure control system (100), comprising:
a first cabin pressure sensor (502-S1) operable to sense aircraft cabin pressure and supply a first cabin pressure signal representative thereof;
a second cabin pressure sensor (502-S2) dissimilar from the first cabin pressure sensor, the second cabin pressure sensor operable to sense aircraft cabin pressure and supply a second cabin pressure signal representative thereof;
a third cabin pressure sensor (502-P1) dissimilar from the first cabin pressure sensor, the third cabin pressure sensor operable to sense aircraft cabin pressure and supply a third cabin pressure signal representative thereof;
a first analog circuit (610) coupled to receive the first cabin pressure signal and operable, in response thereto, to supply a first analog cabin altitude limit discrete logic signal (628) if the first cabin pressure is less than a minimum pressure value;
a second analog circuit (610) coupled to receive the second cabin pressure signal and operable, in response thereto, to supply a second analog cabin altitude limit discrete logic signal (628) if the second cabin pressure is less than the minimum pressure value; and
a primary controller (110) coupled to receive the first and second analog cabin altitude limit discrete logic signals (628) and the third cabin pressure signal, the primary controller (110) operable in response thereto, to:
generate, based on the third cabin pressure signal, a digital cabin altitude limit discrete signal;
determine when at least two of the digital cabin altitude limit discrete signal and the analog cabin altitude discrete logic signals are indicative of cabin pressure being less than the minimum pressure value; and, if so
supply primary valve command signals that will cause an outflow valve (104-1, 104-2) to close.

2. The system (100) of claim 1, wherein the primary controller (110) comprises:
a primary control circuit (504-1) coupled to receive the first and second analog cabin altitude limit discrete logic signals and the third cabin pressure signal, and operable, in response thereto, to (i) determine when at least two of the sensed cabin pressures is less than the minimum pressure value and (ii) if so, to supply primary valve actuation control signals that will cause an outflow valve (104-1, 104-2) to close; and
a primary valve actuation control circuit (116) coupled to receive the primary valve actuation control signals and operable, in response thereto, to supply the primary valve command signals that will cause the outflow valve (104-1, 104-2) to close.

3. The system (100) of claim 2, wherein the primary control circuit (504-1) comprises:
a digital signal conditioning circuit (602) coupled to receive the third cabin pressure signal and operable, in response thereto, to supply a digital cabin pressure signal representative thereof.

4. The system (100) of claim 3, wherein the primary control circuit (504-1) is further operable, upon receipt of the third cabin pressure signal, to supply a digital cabin altitude limit discrete logic signal (618) if the third cabin pressure is less than the minimum pressure value,

5. The system (100) of claim 4, further comprising:
a secondary controller (304-2) coupled to receive the first analog cabin altitude limit discrete logic signal (628), the second analog pressure signal (628), and the digital cabin altitude limit discrete logic signal (618), the secondary control circuit (504-2) operable, upon receipt thereof, to (i) determine when at least two of the sensed cabin pressures is less than the minimum pressure value and (ii) if so, to supply secondary valve command signals that will cause the outflow valve (104-1, 104-2) to close.

6. The system (100) to claim 5, wherein the secondary controller (504-2) comprises:
a secondary control circuit (504-2) coupled to receive the first analog cabin altitude limit discrete logic signal, the second analog pressure signal, and the digital cabin altitude limit discrete logic signal (61 8), and operable, upon receipt thereof, to (1) determine when at least two of the sensed cabin pressures is less than the minimum pressure value and (ii) if so, to supply secondary valve actuation control signals that will cause the outflow valve (104-1, 104-2) to close; and
a secondary valve actuation control circuit (116) coupled to receive the secondary valve actuation control signals and operable, in response thereto, to supply the primary valve command signals that will cause the outflow valve (104-1, 104-2) to close.

7. The system (100) of claim 4, wherein the primary valve actuation control circuit (116) is further coupled to receive the first and second analog cabin altitude limit discrete logic signals and the digital cabin altitude limit signal and is further operable, in response thereto, to determine when at least two of the sensed cabin pressures is less than the minimum pressure value.

8. The system (100) of claim 1, wherein the first and second analog circuits each comprises:
an analog signal conditioning circuit (604) coupled to receive either the first or second pressure signal and operable, in response thereto, to supply a first or second analog pressure signal, respectively; and
a comparator circuit (632) coupled to receive the first or second analog pressure signal and operable, in response thereto, to supply the first or second analog discrete logic signal (622, 624), respectively, if the first cabin pressure, respectively, is less than the minimum pressure value.

9. The system (100) of claim 1, wherein the primary controller (110) is further coupled to receive an atmospheric pressure signal representative of the atmospheric pressure and operable, upon receipt thereof, to (i) determine the pressure differential between the aircraft cabin pressure and (ii) inhibit use of the third cabin pressure from the determination of when at least two of the sensed cabin pressures is less than the minimum pressure value, and wherein the system (100) further comprises:
a differential pressure sensor (502-P2) adapted to sense a pressure differential between the aircraft cabin pressure and atmospheric pressure and supply a differential pressure signal representative thereof;
a secondary controller (504-2) coupled to receive the differential pressure signal and operable, upon receipt thereof, to supply an altitude limit inhibit command signal if the differential pressure exceeds a predetermined magnitude;
a controllable switch (516) coupled to receive the altitude inhibit command and operable, upon receipt thereof, to prevent the second analog cabin altitude limit discrete logic signal from being supplied to the primary controller (110).

10. The system (100) of claim 1, further comprising:
an outflow valve (104-1, 104-2) adapted coupled to receive the primary valve command signals and operable, upon receipt thereof, to move between at least an open position and a closed position.

## Patentansprüche

1. System (100) zur Flugzeugkabinen-Druckregelung, umfassend:
einen ersten Kabinendrucksensor (502-S1), der betriebsbereit ist, um einen Flugzeugkabinendruck zu fühlen und ein erstes Kabinendrucksignal zu liefern, das diesen repräsentiert;
einen zweiten Kabinendrucksensor (502-S2), der sich von dem ersten Kabinendrucksensor unterscheidet, wobei der zweite Kabinendrucksensor betriebsbereit ist, um einen Flugzeugkabinendruck zu fühlen und ein zweites Kabinendrucksignal zu liefern, das diesen repräsentiert;
einen dritten Kabinendrucksensor (502-P1), der sich von dem ersten Kabinendrucksensor unterscheidet, wobei der dritte Kabinendrucksensor betriebsbereit ist, um einen Flugzeugkabinendruck zu fühlen und ein drittes Kabinendrucksignal zu liefern, das diesen repräsentiert;
eine erste analoge Schaltung (610), die verbunden ist, um das erste Kabinendrucksignal zu empfangen, und als Reaktion darauf betriebsbereit ist, um ein erstes analoges diskretes logisches Kabinenhöhengrenzsignal (628) zu liefern, wenn der erste Kabinendruck unter einem minimalen Druckwert liegt;
eine zweite analoge Schaltung (610), die verbunden ist, um das zweite Kabinendrucksignal zu empfangen, und als Reaktion darauf betriebsbereit ist, um ein zweites analoges diskretes logisches Kabinenhöhengrenzsignal (628) zu liefern, wenn der zweite Kabinendruck unter dem minimalen Druckwert liegt; und
eine primäre Steuerung (110), die verbunden ist, um das erste und das zweite analoge diskrete logische Kabinenhöhengrenzsignal (628) und das dritte Kabinendrucksignal zu empfangen, wobei die primäre Steuerung (110) als Reaktion darauf betriebsbereit ist, Folgendes auszuführen:
auf der Grundlage des dritten Kabinendrucksignals, Erzeugen eines digitalen diskreten Kabinenhöhengrenzsignals;
Bestimmen, wann mindestens zwei des digitalen diskreten Kabinenhöhengrenzsignals und der analogen diskreten logischen Kabinenhöhengrenzsignale anzeigen, dass der Kabinendruck unter dem minimalen Druckwert liegt; und, falls dem so ist
Liefern primärer Ventilbefehlssignale, die bewirken werden, dass sich ein Auslassventil (104-1, 104-2) schließt.

2. System (100) nach Anspruch 1, wobei die primäre Steuerung (110) Folgendes umfasst:
eine primäre Steuerschaltung (504-1), die verbunden ist, um das erste und das zweite analoge diskrete logische Kabinenhöhengrenzsignal und das dritte Kabinendrucksignal zu empfangen, und als Reaktion darauf betriebsbereit ist, um (i) zu bestimmen, wann mindestens zwei der gefühlten Kabinendrücke unter dem minimalen Druckwert liegen, und (ii) falls dem so ist, primäre Ventilbetätigungs-Steuersignale zu liefern, die bewirken werden, dass sich ein Auslassventil (104-1, 104-2) schließt; und
eine primäre Ventilbetätigungs-Steuerschaltung (116), die verbunden ist, um die primären Ventilbetätigungs-Steuersignale zu empfangen, und als Reaktion darauf betriebsbereit ist, um die primären Ventilbefehlssignale zu liefern, die bewirken werden, dass sich das Auslassventil (104-1, 104-2) schließt.

3. System (100) nach Anspruch 2, wobei die primäre Steuerschaltung (504-1) Folgendes umfasst:
eine digitale Signalaufbereitungsschaltung (602), die verbunden ist, um das dritte Kabinendrucksignal zu empfangen, und als Reaktion darauf betriebsbereit ist, ein digitales Kabinendrucksignal zu liefern, das dieses repräsentiert.

4. System (100) nach Anspruch 3, wobei die primäre Steuerschaltung (504-1) ferner betriebsbereit ist, um nach Empfang des dritten Kabinendrucksignals ein digitales diskretes logisches Kabinenhöhengrenzsignal (618) zu liefern, wenn der dritte Kabinendruck unter dem minimalen Druckwert liegt.

5. System (100) nach Anspruch 4, ferner umfassend:
eine zweite Steuerung (304-2), die verbunden ist, um das erste analoge diskrete logische Kabinenhöhengrenzsignal (628), das zweite analoge Drucksignal (628) und das digitale diskrete logische Kabinenhöhengrenzsignal (618) zu empfangen, wobei die sekundäre Steuerschaltung (504-2) nach Empfang davon betriebsbereit ist, um (i) zu bestimmen, wann mindestens zwei der gefühlten Kabinendrücke unter dem minimalen Druckwert liegen, und (ii) falls dem so ist, sekundäre Ventilbefehlssignale zu liefern, die bewirken werden, dass sich das Auslassventil (104-1, 104-2) schließt.

6. System (100) nach Anspruch 5, wobei die sekundäre Steuerung (504-2) Folgendes umfasst:
eine sekundäre Steuerschaltung (504-2), die verbunden ist, um das erste analoge diskrete logische Kabinenhöhengrenzsignal, das zweite analoge Drucksignal und das digitale diskrete logische Kabinenhöhengrenzsignal (618) zu empfangen, und nach Empfang davon betriebsbereit ist, um (i) zu bestimmen, wann mindestens zwei der gefühlten Kabinendrücke unter dem minimalen Druckwert liegen, und (ii) falls dem so ist, sekundäre Ventilbetätigungs-Steuersignale zu liefern, die bewirken werden, dass sich ein Auslassventil (104-1, 104-2) schließt; und
eine sekundäre Ventilbetätigungs-Steuerschaltung (116), die verbunden ist, um die sekundären Ventilbetätigungs-Steuersignale zu empfangen, und als Reaktion darauf betriebsbereit ist, um die primären Ventilbefehlssignale zu liefern, die bewirken werden, dass sich das Auslassventil (104-1, 104-2) schließt.

7. System (100) nach Anspruch 4, wobei die primäre Ventilbetätigungs-Steuerschaltung (116) ferner verbunden ist, um das erste und das zweite analoge diskrete logische Kabinenhöhengrenzsignal und das digitale Kabinenhöhengrenzsignal zu empfangen, und als Reaktion darauf betriebsbereit ist, um zu bestimmen, wann mindestens zwei der gefühlten Drücke unter dem minimalen Druckwert liegen.

8. System (100) nach Anspruch 1, wobei die erste und die zweite analoge Schaltung jeweils Folgendes umfassen:
eine analoge Signalaufbereitungsschaltung (604), die verbunden ist, um entweder das erste oder das zweite Drucksignal zu empfangen, und als Reaktion darauf betriebsbereit ist, um jeweils ein erstes oder ein zweites analoge Druckssignal zu liefern; und
eine Komparatorschaltung (632), die verbunden ist, um das erste oder das zweite analoge Drucksignal zu empfangen, und als Reaktion darauf betriebsbereit ist, um das entsprechende erste oder zweite analoge diskrete logische Signal (622, 624) zu liefern, wenn der entsprechende erste Kabinendruck unter dem minimalen Druckwert liegt.

9. System (100) nach Anspruch 1, wobei die primäre Steuerung (110) ferner verbunden ist, um ein Atmosphärendrucksignal zu empfangen, das den Atmosphärendruck repräsentiert, und nach Empfang davon betriebsbereit ist, (i) die Druckdifferenz zwischen dem Flugzeugkabinendruck zu bestimmen und (ii) die Verwendung des dritten Kabinendrucks auf der Grundlage der Bestimmung, wann mindestens zwei der gefühlten Kabinendrücke unter dem minimalen Druckwert liegen, zu sperren, und wobei das System (100) ferner Folgendes umfasst:
einen Differenzdrucksensor (502-P2), der geeignet ist, eine Druckdifferenz zwischen dem Flugzeugkabinendruck und dem Atmosphärendruck zu fühlen und ein Differenzdrucksignal zu liefern, das diesen repräsentiert;
eine sekundäre Steuerung (504-2), die verbunden ist, um das Differenzdrucksignal zu empfangen, und nach Empfang davon betriebsbereit ist, ein Höhengrenz-Sperrbefehlssignal zu liefern, wenn der Differenzdruck ein vorbestimmtes Ausmaß überschreitet;
einen steuerbaren Schalter (516), der verbunden ist, um den Höhensperrbefehl zu empfangen, und nach Empfang davon betriebsbereit ist, um zu verhindern, dass das zweite analoge diskrete logische Kabinenhöhengrenzsignal an die primäre Steuerung (110) geliefert wird.

10. System (100) nach Anspruch 1, ferner umfassend:
ein Auslassventil (104-1, 104-2), das verbunden werden kann, um die primären Ventilbefehlssignale zu empfangen, und nach Empfang davon betriebsbereit ist, um sich zwischen mindestens einer offenen Position und einer geschlossenen Position zu bewegen.

## Revendications

1. Système de commande de pression de cabine d'aéronef (100), comprenant :
un premier capteur de pression de cabine (502-S1) exploitable pour détecter une pression de cabine d'aéronef et fournir un premier signal de pression de cabine représentatif de celle-ci ;
un deuxième capteur de pression de cabine (502-S2) différent du premier capteur de pression de cabine, le deuxième capteur de pression de cabine étant exploitable pour détecter une pression de cabine d'aéronef et fournir un deuxième signal de pression de cabine représentatif de celle-ci ;
un troisième capteur de pression de cabine (502-P1) différent du premier capteur de pression de cabine, le troisième capteur de pression de cabine étant exploitable pour détecter une pression de cabine d'aéronef et fournir un troisième signal de pression de cabine représentatif de celle-ci ;
un premier circuit analogique (610) couplé pour recevoir le premier signal de pression de cabine et exploitable, en réponse à celui-ci, pour fournir un premier signal logique discret de limite d'altitude de cabine analogique (628) si la première pression de cabine est inférieure à une valeur de pression minimum ;
un deuxième circuit analogique (610) couplé pour recevoir le deuxième signal de pression de cabine et exploitable, en réponse à celui-ci, pour fournir un deuxième signal logique discret de limite d'altitude de cabine analogique (628) si la deuxième pression de cabine est inférieure à la valeur de pression minimum ; et
un contrôleur principal (110) couplé pour recevoir les premier et deuxième signaux logiques discrets de limite d'altitude de cabine analogiques (628) et le troisième signal de pression de cabine, le contrôleur principal (110) étant exploitable en réponse à ceux-ci pour :
générer, d'après le troisième signal de pression de cabine, un signal discret de limite d'altitude de cabine numérique ;
déterminer quand au moins deux du signal discret de limite d'altitude de cabine numérique et des signaux logiques discrets d'altitude de cabine analogiques indiquent que la pression de cabine est inférieure à la valeur de pression minimum ; et, dans ce cas
fournir des signaux de commande de vanne principaux qui amènent une vanne d'échappement (104-1, 104-2) à se fermer.

2. Système (100) selon la revendication 1, dans lequel le contrôleur principal (110) comprend :
un circuit de commande principal (504-1) couplé pour recevoir les premier et deuxième signaux logiques discrets de limite d'altitude de cabine analogiques et le troisième signal de pression de cabine, et exploitable, en réponse à ceux-ci, pour (i) déterminer quand au moins deux des pressions de cabine détectées sont inférieures à la valeur de pression minimum et (ii) dans ce cas, fournir des signaux de commande d'actionnement de vanne principaux qui amèneront une vanne d'échappement (104-1, 104-2) à se fermer ; et
un circuit de commande d'actionnement de vanne principal (116) couplé pour recevoir les signaux de commande d'actionnement de vanne d'échappement et exploitable, en réponse à ceux-ci, pour fournir les signaux de commande de vanne principaux qui amèneront la vanne d'échappement (104-1, 104-2) à se fermer.

3. Système (100) selon la revendication 2, dans lequel le circuit de commande principal (504-1) comprend :
un circuit de conditionnement de signal numérique (602) couplé pour recevoir le troisième signal de pression de cabine et exploitable en réponse à celui-ci, pour fournir un signal de pression de cabine numérique représentatif de celui-ci.

4. Système (100) selon la revendication 3, dans lequel le circuit de commande principal (504-1) est exploitable en outre, sur réception du troisième signal de pression de cabine, pour fournir un signal logique discret de limite d'altitude de cabine numérique (618) si la troisième pression de cabine est inférieure à la valeur de pression minimum.

5. Système (100) selon la revendication 4, comprenant en outre :
un contrôleur secondaire (304-2) couplé pour recevoir le premier signal logique discret de limite d'altitude de cabine (628), le deuxième signal de pression analogique (628), et le signal logique discret de limite d'altitude de cabine numérique (618), le circuit de commande secondaire (504-2) étant exploitable, sur réponse de ceux-ci pour (i) déterminer quand au moins deux des pressions de cabine détectées sont inférieures à la valeur de pression minimum et (ii) dans ce cas, fournir des signaux de commande de vanne secondaires qui amèneront la vanne d'échappement (104-1, 104-2) à se fermer.

6. Système (100) selon la revendication 5, dans lequel le contrôleur secondaire (504-2) comprend :
un circuit de commande secondaire (504-2) couplé pour recevoir le premier signal logique discret de limite d'altitude de cabine analogique, le deuxième signal de pression analogique, et le signal logique discret de limite d'altitude de cabine numérique (618), et exploitable, sur réception de ceux-ci, pour (i) déterminer quand au moins deux des pressions de cabine détectées sont inférieures à la valeur de pression minimum et (ii) dans ce cas, fournir des signaux de commande d'actionnement de vanne secondaires qui amèneront la vanne d'échappement (104-1, 104-2) à se fermer ; et
un circuit de commande d'actionnement de vanne secondaire (116) couplé pour recevoir les signaux de commande d'actionnement de vanne secondaires et exploitable, en réponse à ceux-ci, pour fournir les signaux de commande de vanne principaux qui amèneront la vanne d'échappement (104-1, 104-2) à se fermer.

7. Système (100) selon la revendication 4, dans lequel le circuit de commande d'actionnement de vanne principal (116) est couplé en outre pour recevoir les premier et deuxième signaux logiques discrets de limite d'altitude de cabine analogiques et le signal de limite d'altitude de cabine numérique et est exploitable en outre, en réponse à ceux-ci, pour déterminer quand au moins deux des pressions de cabine détectées sont inférieures à la valeur de pression minimum.

8. Système (100) selon la revendication 1, dans lequel les premier et deuxième circuits analogiques comprennent chacun :
un circuit de conditionnement de signal analogique (604) couplé pour recevoir soit le premier, soit le deuxième signal de pression et exploitable en réponse à celui-ci, pour fournir un premier ou un deuxième signal de pression analogique, respectivement ; et
un circuit comparateur (632) couplé pour recevoir le premier ou deuxième signal de pression analogique et exploitable, en réponse à celui-ci, pour fournir le premier ou le deuxième signal logique discret analogique (622, 624), respectivement, si la première pression de cabine, respectivement, est inférieure à la valeur de pression minimum.

9. Système (100) selon la revendication 1, dans lequel le contrôleur principal (110) est couplé en outre pour recevoir un signal de pression atmosphérique représentatif de la pression atmosphérique et exploitable, sur réception de celui-ci, pour (i) déterminer le différentiel de pression entre la pression de cabine d'aéronef et (ii) inhiber l'utilisation de la troisième pression de cabine dans la détermination de quand au moins deux des pressions de cabine détectées sont inférieures à la valeur de pression minimum, et dans lequel le système (100) comprend en outre :
un capteur de pression différentielle (502-P2) adapté pour détecter un différentiel de pression entre la pression de cabine d'aéronef et la pression atmosphérique et fournir un signal de pression différentielle représentatif de celui-ci ;
un contrôleur secondaire (504-2) couplé pour recevoir le signal de pression différentiel et exploitable, sur réception de celui-ci, pour fournir un signal de commande d'inhibition de limite d'altitude si la pression différentielle dépasse une grandeur prédéterminée ;
un commutateur contrôlable (516) couplé pour recevoir la commande d'inhibition d'altitude et exploitable, sur réception de celle-ci, pour empêcher la fourniture du deuxième signal logique discret de limite d'altitude de cabine analogique au contrôleur principal (110).

10. Système (100) selon la revendication 1, comprenant en outre :
une vanne d'échappement (104-1, 104-2) adaptée couplée pour recevoir les signaux de commande de vanne principaux et exploitable, sur réception de ceux-ci, pour se déplacer entre au moins une position ouverte et une position fermée.
